# EUROPEAN PATENT APPLICATION

(11) **EP 2 264 852 A2**
(43) Date of publication of application: **22.12.2010**
(21) Application number: 09008971.5
(22) Date of filing: 09.07.2009
(51) Int. Cl.: H02J 7/00

(54) **Portable phone holder and charger**

(30) Priority: 15.06.2009 US 484965
(71) Applicant: Teleway Industrial Ltd., Ma Jia Long Industrial Area Nanshan District, Shenzhen Guangdong 518052 (CN)
(72) Inventor: Tan, Qing Song, Shenzhen 518052 Gunagdong Province (CN)
(74) Representative: Duffy, Assumpta Dympna

(57) **Abstract**

A portable phone holder and charger 10 for holding and charging a portable electronic device 30. The portable phone holder and charger 10 includes a cradle portion 12 which cradles a portable electronic device 30, a plug 14 for connecting to the portable electronic device 30, a base portion 16, a battery and recharging electronic circuitry 60, and a hinge 18 that pivotally connects together the cradle portion 12 and the base portion 16. The plug 14 is adapted to engage with the portable electronic device 30 and extends from the hinge 18 and moves in concert along with the cradle portion 12 when the base portion 16 and the cradle portion 12 are pivoted relative to each other. The cradle portion 12 retains the portable electronic device 30 in connection with the plug 14. The hinge 18 preferably provides click stops at a plurality of positions of pivoting of the cradle portion 12 relative to the base portion 16.

## Description

### SUMMARY OF THE INVENTION

This invention is related chargers for portable devices, and more particularly a portable phone holder and charger.

In recent years, hundreds of millions of portable or mobile telephone handsets, aka cellular phones, have been produced and are in use around the world. A consistent problem with cellular phones, particularly those that are rich in features, such as internet browsers, video capabilities, texting, music playback and other features is that they use a considerable amount of electrical power, and batteries tend to run down quickly.

While battery chargers are used to recharge cellular phones at electrical outlet plugs and from accessory power plugs in vehicles, many times a cellular phone user does not have access to these sources to recharge their cellular phone batteries. There are numerous types of back up batteries for cellular phones and other portable electronic devices that can be connected to the cellular phone or other portable electronic device to provide up a back up power supply. However, many of these chargers are bulky and impede usage of the cellular phone while the cellular phone is connected to the charger, and there accordingly remains a need for an improved cellular phone holder and charger.

The invention provides an improved portable phone holder and charger for holding and charging portable electronic devices such as cellular phone, PDAs, and the like. It includes a battery holding base portion, a cellular phone cradle portion, and a hinge. The hinge hingeably connects together the battery holding base portion and the cellular phone cradle portion. The cellular phone cradle portion has an electrical engagement which is adapted to electrically connect to a cellular phone engaged therewith. The cellular phone holder and charger is adapted to move between a closed position, wherein the cellular phone cradle portion is brought into close proximity with the bottom surface of the battery holding base portion to protect the electrical engagement and reduce the size of the unit, and a full opened position, wherein the cellular phone cradle portion is tilted back over the battery holding base portion so that when the battery holding base portion is positioned on a horizontal surface the cellular phone in the cellular phone cradle portion will be tiled back over the battery holding base portion so that its screen can be viewed and features of the phone can be accessed. The cellular phone holder and charger can also be sit up on a horizontal surface by setting the cellular phone cradle portion and the battery holding base portion on a side edge so a cellular phone's screen therein will be in a landscape orientation. Circuitry in the cellular phone holder and charger of the invention is adapted so that if a cellular phone engaged thereto is in need of charging, power from a battery in the cellular phone holder and charger or external power supplied thereto will charge the cellular phone battery. The cellular phone holder and charger itself is connectable to an external power supply so that the battery therein can be charged.

### BRIEF DESCRIPTION OF THE DRAWINGS

FIG. 1 is a perspective view showing an exemplary embodiment of the portable phone holder and charger of the invention in a partially opened orientation.

FIG. 2 is a perspective view the exemplary portable phone holder and charger of FIG. 1 in its fully opened orientation holding an exemplary cellular phone.

FIG. 3 is a side view showing the portable phone holder and charger in two of several orientations.

FIG. 4 is a front view showing the portable phone holder and charger in its closed orientation.

FIG. 5 is a back view showing the portable phone holder and charger in its closed orientation.

FIG. 6 is a block view showing various functional elements of circuitry of the portable phone holder and charger of the invention.

### DETAILED DESCRIPTION OF THE INVENTION

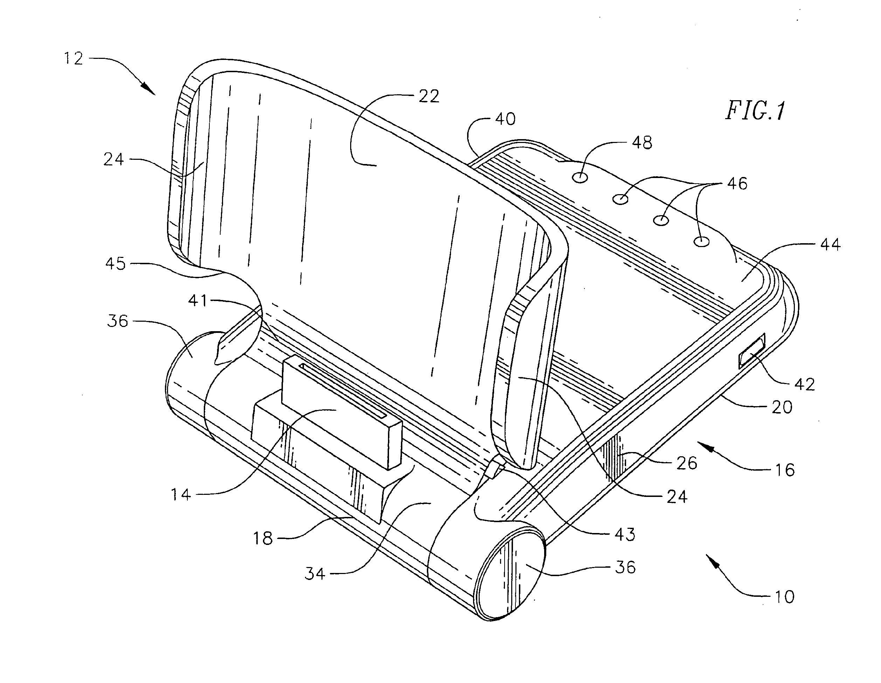

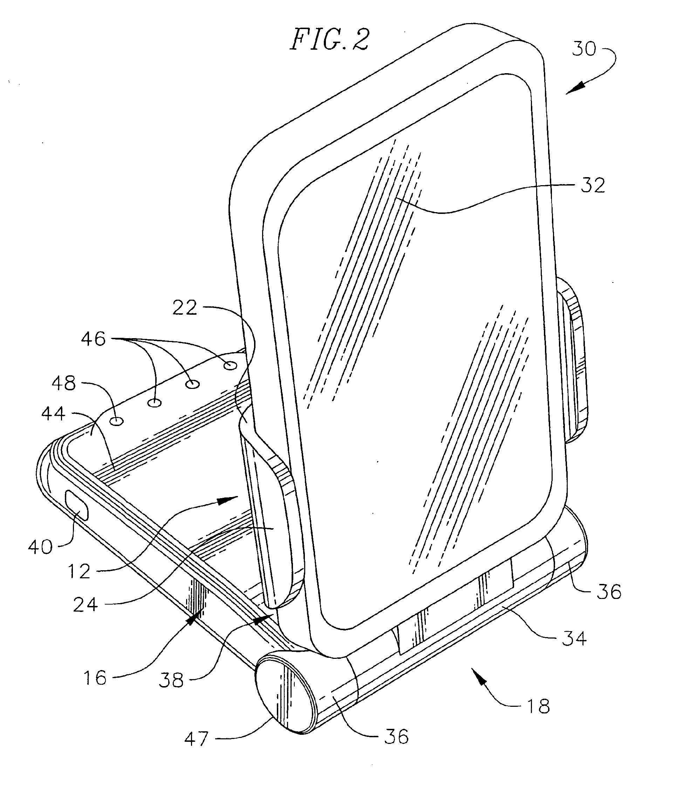

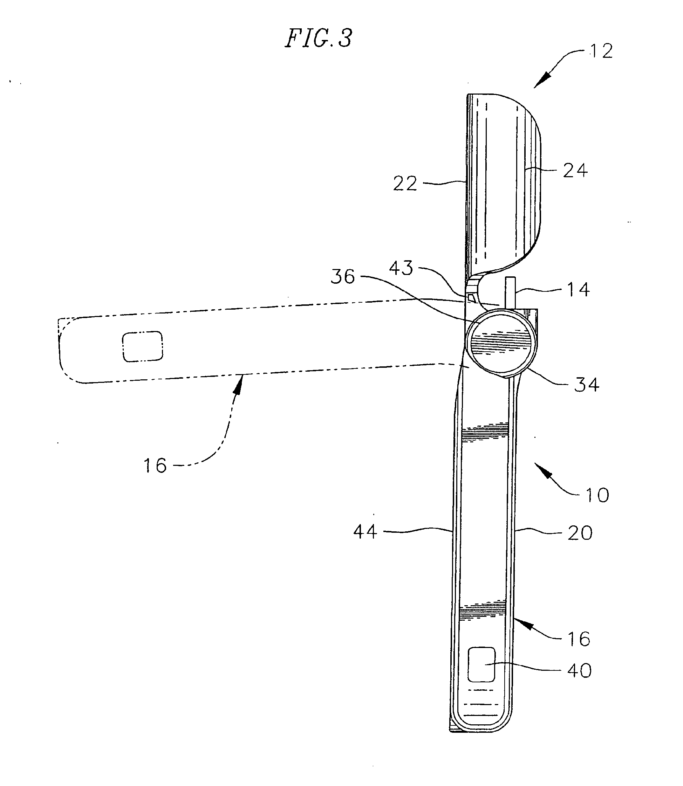

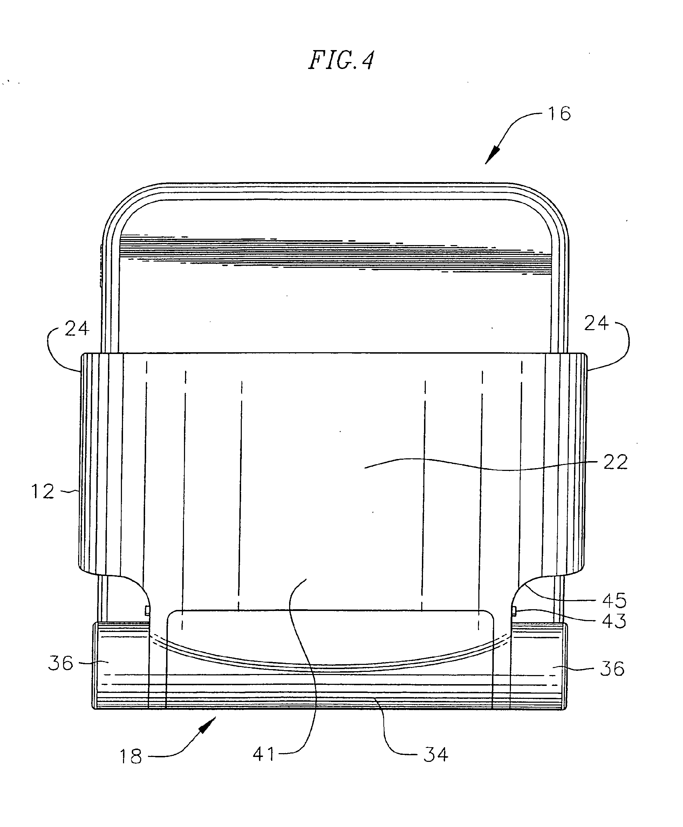

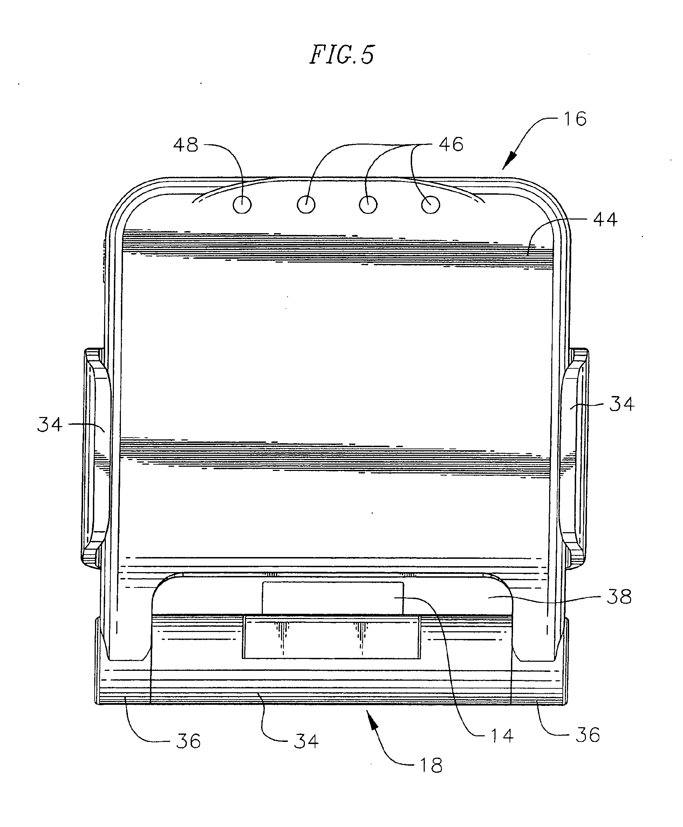

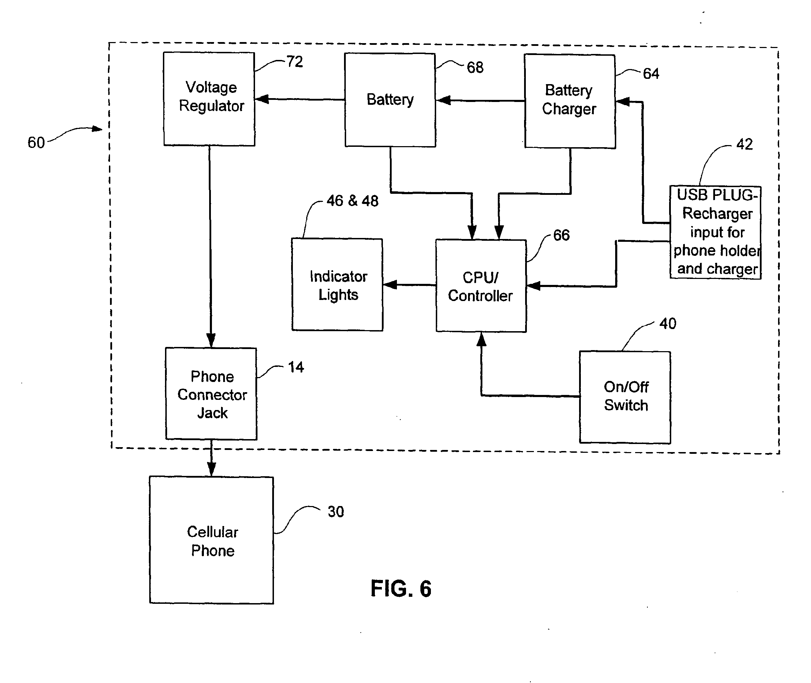

FIG. 1 is a perspective view showing an exemplary embodiment of the portable phone holder and charger 10 of the invention in a partially opened orientation. It includes a cellular phone cradle portion 12 and an electrical engagement 14, such as electrical jack, which is adapted to electrically connect to a cellular phone or other portable electronic device to be engaged therewith. In cases where the portable phone holder and charger 10 is for with devices such as the Apple^{®} brand iPOD^{®} or iTouch^{®} portable phones and MP3 and MP4 players, a 30-pin type of connector jack can be provided. However, the electrical engagement will be selected based on the device to engaged with the portable phone holder and charger 10 of the invention. A battery holding base portion 16 is further provided. The battery holding base portion 16 holds a battery and circuitry (shown in FIG. 6), which powers up and recharges the portable electronic device connected thereto. A hinge 18 pivotally connects together the battery holding base portion 16 and the cellular phone cradle portion 12 together, and allows these portions to be moved relative to each other between a closed position, as best shown in FIGS. 4 and 5, wherein a back support 22 of the cellular phone cradle portion 12 is brought into close proximity with a bottom face 20 of the battery holding base portion 16 to protect the electrical engagement 14 and reduce the size of the unit, and a full opened position as shown in FIG. 2. The battery holding base portion 16 has side edges 26. Extending from the back support 22 of the cellular phone cradle portion 12 are side projections 24. These side projections 24 are sized and shaped to guide in and securely hold the cellular phone to be cradled in the cellular phone cradle portion 12 and thereby help ensure that the electrical engagement 14 is properly aligned to engaged with a complementary socket in the cellular phone. The side projections 24 can preferably be curved inwardly towards each other to frictionally fit along sides of the cellular phone. The hinge 18 can conveniently comprise the cellular phone cradle portion 12 having a generally cylindrical portion 34 that is located at a lower end of the front face 22. The electrical engagement 14 extends upwardly from the generally cylindrical portion 34. The battery holding base portion 16 has two spaced apart retention ends 36 which pivotally receive the generally cylindrical portion 34 therebetween, with the generally cylindrical portion 34 and the retention ends 36 comprising the hinge 18. The hinge 18 can preferably include click stop means that will permit the phone cradle portion 12 and the battery holding base portion 16 to be moved between different degrees of pivot with respect to each other, as best shown in FIG. 3. Such click stop means can be provided by spring loading the hinge with a plurality of stop positions (two of which are shown in FIG. 3), wherein a slight force is required to move the cradle portion 12 and the battery holding base portion 16 out of stop positions. The two spaced apart retention ends 36 extend outwardly from the battery holding base portion 16 and leave a space 38 therebetween. When the cellular phone cradle portion 12 is pivoted with respect to the battery holding base portion 16, the electrical engagement 14 moves with the cellular phone cradle portion 12. The space 38 is adapted to allow the electrical engagement 14 to move into the space 38 when the cellular phone cradle portion 12 and the battery holding base portion 16 are brought into their closed orientation, as shown in FIGS. 4 and 5. This protects the electrical engagement 14 from possible damage. The cradle portion 12 has a neck region 41 that merges into the generally cylindrical portion 34. Stop protrusions 43 extends from inside edges 45 of the neck region 41. The electrical engagement 14 is electrically connected to the battery holding base portion 16 through the hinge 18, e.g., by wiring (not shown) passing through the hinge 18. An on/off switch 40 and a power in jack 42 can be positioned (e.g., on side edges 26) of the battery holding base portion 16.

FIG. 2 is a perspective view the exemplary portable phone holder and charger 10 of FIG. 1 in its fully opened orientation holding an exemplary cellular phone 30. In this position, the cellular phone cradle portion 12 is tilted back over the battery holding base portion 16 so that when the battery holding base portion 16 is positioned on a horizontal surface the cellular phone cradle portion 12 will be tiled back over a top face 44 of the battery holding base portion 16 and hold a cellular phone 30 in that position so that its screen 32 and controls can be viewed and accessed even when it is docked with the battery holding base portion 16. In this orientation, the stop protrusions 43 will impinge on inside edges of the space 38 preventing the cradle portion 12 from being pushed back further over the battery holding base portion 10, and the cradle portion 12 will extend over a top surface 44 of the battery holding base portion 16 which faces up when the device is placed on a flat surface. In lieu of having the stop protrusions 43 on the inside edges 45 of the neck region 41 of the cradle portion 12, the stop protrusions 43 could be placed on inside edges of the space 38. Or, the hinge can be designed to limit the backward tilt of the cradle portion 12 relative to the battery holding base portion 16. The on/off switch 40 and hinge 18 with its generally cylindrical portion 34 and two spaced apart retention ends 36 is shown. The hinge 18 can have a lower face 47 that extends lower than the bottom face 20 of the battery holding base portion 16, so that when the portable phone holder and charger 10 is positioned on a flat horizontal surface, the battery holding base portion 16 will rest on the lower face 45 of the hinge 18 and a front lower edge of the bottom face 20 of the battery holding base portion 16. This will provide both stability and ease of moving the portable phone holder and charger 10 on the flat horizontal surface. Alternately, the portable phone holder and charger 10 can be set up with an edge 26 of the battery holding base portion 16 and a side projection 24 of the cradle portion 12 sitting on a horizontal surface so that the cellular phone's screen will be oriented in a landscape orientation (not shown). Regardless of how the portable phone holder and charger 10 and cellular phone 30 held therein are positioned, the cellular phone will be securely held and its features will be accessible.

FIG. 3 is a side view showing the portable phone holder and charger 10 in an orientation wherein the cellular phone cradle portion 12 and the battery holding base portion 16 are generally located along a vertical plane. In this orientation, a user can fully use the cellular phone and hold it against his/her ear, etc., with the battery holding base portion 16 extending below a plane of the cellular phone. In some other prior art cellular chargers, the weight or force of a battery connected to an recharge socket at a bottom of a cellular phone can exert a pulling force on a recharge socket on the lower end of the cellular phone, which force may possibly damage the delicate recharge socket and/or cause the accessory battery to pull free. In contrast, in the portable phone holder and charger 10 of the invention, the electrical engagement 14 is securely attached above the generally cylindrical portion 34 of the hinge 18 and the battery and electrical circuitry contained in the battery holding base portion 16 are connected through the hinge. This provides a very secure interconnection between a user's portable phone, which will be securely engaged with the cellular phone cradle portion 12 and be seated atop on the electrical engagement 14 (so that there is no excess force applied through the connection between the electrical engagement 14 of the device 10 and the cellular phone 30), with the battery and electrical circuitry contained in the battery holding base portion 16 connected thereto through the hinge 18. One other orientation (e.g., click stop position) is illustrated with the battery holding base portion 16 shown in phantom lines.

FIG. 4 is a front view showing the portable phone holder and charger 10 in its closed orientation wherein a bottom face 20 of the battery holding base portion 16 is brought in close proximity to the back support 22 of the cellular phone cradle portion 12. The side projections 24 of the cellular phone cradle portion 12 will snap along sides of the battery holding base portion 16. The hinge 18 with its generally cylindrical portion 34 and two spaced apart retention ends 36 is shown.

FIG. 5 is a back view showing the portable phone holder and charger 10 in its closed orientation. Battery state indicator lights 46 (to indicate the charge level of the battery in the portable phone holder and charger 10) can be provided on the top surface 44 of the battery holding base portion 16. In addition, a recharge indicator light 48 can be included (e.g., in a different color than the color of the battery state indicator light 46) to indicate to a user that a connected cellular phone is being recharged. The side projections 24 of the cellular phone cradle portion 12 will slide along sides of the battery holding base portion 16. The hinge 18 with its generally cylindrical portion 34 and two spaced apart retention ends 36 is shown, along with the electrical engagement 14 moved into the space 38 where it is protected from possible damage when not in use.

FIG. 6 is a block view showing various major elements of the circuitry 60 of the portable phone holder and charger 10. A USB plug or other recharger input for the phone holder and charger 42 connects to a battery charger 64 and a CPU/Controller 66. The battery charger 64 is connected to a battery 68 and the CPU/Controller 66. The battery 68 is preferably and quickly charging and high capacity battery, e.g., a lithium-ion polymer battery. If the battery 68 is of different voltage than the voltage coming in through the USB plug 42, a voltage regulator 72 will change the output voltage that is fed to a phone connector jack (electrical engagement) 14 that engages with the cellular phone 30. Battery state indicator lights 46 and a recharge indicator light 48, such as LED lights 46, are controlled by the CPU/Controller 66 and indicate to a user the charge of the battery 68 and whether the connected cellular phone 30 is being charged. An on/off switch 40 allows the circuitry to be activated.

While the portable phone holder and charger 10 of the invention has been described herein for use with a "portable phone" or "cellular phone", it can be used with a wide variety of portable handheld devices such as cellular phone, personal digital assistance, wireless internet devices, and the like that need to be recharged. Having thus described exemplary embodiments of the present invention, it should be understood by those skilled in the art that the above disclosures are exemplary only and that various other alternatives, adaptations and modifications may be made within the scope of the present invention. The presently disclosed embodiments are to be considered in all respects as illustrative and not restrictive.

## Claims

1. A portable phone holder and charger for holding and charging a portable electronic device, comprising:
a cradle portion which cradles a portable electronic device;
an electrical engagement for connecting to the portable electronic device;
a base portion; and
a hinge that pivotally connects together the cradle portion and the base portion.

2. The portable phone holder and charger of claim 1, wherein the hinge comprises two spaced apart retention ends on the base portion defining a space therebetween, and an extension of the cradle portion, which extension is pivotally positioned between the two spaced apart retention ends, and wherein the electrical engagement comprises a plug that extends from the extension of the cradle portion and moves along with the cradle portion when the base portion and the cradle portion are pivoted relative to each other, which electrical engagement will move into the space when the cradle portion and the base portion are brought into a closed orientation.

3. The portable phone holder and charger of claim 2, wherein the hinge provides click stops at a plurality of positions of pivoting of the cradle portion relative to the base portion.

4. The portable phone holder and charger of claim 1, wherein the cradle portion comprises a back support and two side projections which side projections are adapted to engage with sides of the base portion when the portable phone holder and charger is in a closed orientation, and which cradle portion holds the portable electronic device it is used to recharge.

5. The portable phone holder and charger of claim 1, wherein a battery and recharging electronic circuitry are located in the base portion, and wherein the battery and recharging electronic circuitry is adapted to permit the portable electronic device to be used and recharged while connected to the portable phone holder and charger.

6. The portable phone holder and charger of claim 5, wherein the battery and recharging electronic circuitry includes an input plug for powering and recharging the portable phone holder and charger, a battery charger, a battery, a controller, status indicator lights, an on/off switch, a voltage regulator, and an output to the electrical engagement.

7. The portable phone holder and charger of claim 1, wherein the electrical engagement is adapted to engage with a portable electronic device and extends from the hinge and moves in concert along with the cradle portion when the base portion and the cradle portion are pivoted relative to each other, and wherein the cradle portion retains the portable electronic device in connection with the electrical engagement.

8. The portable phone holder and charger of claim 8, wherein the hinge provides click stops at a plurality of positions of pivoting of the cradle portion relative to the base portion.

9. A portable phone holder and charger for holding and charging a portable electronic device, comprising:
a cradle portion that comprises a back support and two side projections which side projections are adapted to engage with sides of the base portion when the portable phone holder and charger is in a closed orientation;
an electronic connection plug;
a base portion which includes a battery and recharging electronic circuitry, wherein the battery and recharging electronic circuitry is adapted to permit the portable electronic device to be used and recharged while connected to the portable phone holder and charger.; and
a hinge that hingeably connects together the cradle portion and the base portion, the hinge comprising two spaced apart retention ends on the base portion defining a space therebetween, and an extension of the cradle portion, which extension is pivotally positioned between the two spaced apart retention ends, and wherein the electronic connection plug extends from the extension of the cradle portion and moves along with the cradle portion when the base portion and the cradle portion are pivoted relative to each other, which electronic connection plug will move into the space when the cradle portion and the base portion are brought into the closed orientation.

10. The portable phone holder and charger of claim 9, wherein the hinge provides click stops at a plurality of positions of pivoting of the cradle portion relative to the base portion.

11. The portable phone holder and charger of claim 9, wherein the cradle portion comprises a back support and two side projections which side projections are adapted to engage with sides of the base portion when the portable phone holder and charger is in a closed orientation, and holds a portable electronic device it is used to recharge.

12. The portable phone holder and charger of claim 9, wherein the battery and recharging electronic circuitry are located in the base portion, and wherein the battery and recharging electronic circuitry is adapted to permit the portable electronic device to be used and recharged while connected to the portable phone holder and charger.

13. The portable phone holder and charger of claim 8, wherein the electrical engagement is adapted to engage with a portable electronic device and extends from the hinge and moves in concert along with the cradle portion when the base portion and the cradle portion are pivoted relative to each other, and wherein the cradle portion retains the portable electronic device in connection with the electrical engagement.
